# EUROPEAN PATENT APPLICATION

(11) **EP 2 383 313 A1**
(43) Date of publication of application: **02.11.2011**
(21) Application number: 10735789.9
(22) Date of filing: 26.01.2010
(51) Int. Cl.: C09D 11/00

(54) **MARKING INK**

(30) Priority: 29.01.2009 JP 2009017536
(71) Applicant: Tokai Senko K.K., Kiyosu-shi Aichi 452-0068 (JP); Yazaki Corporation, Minato-ku Tokyo 108-8333 (JP)
(72) Inventor: MUTO, Mariko, Kiyosu-shi Aichi 452-0068 (JP); KAMATA, Takeshi, Susono-shi Shizuoka 410-1194 (JP); SUGIMURA, Keigo, Susono-shi Shizuoka 410-1194 (JP)
(74) Representative: Keller, Günter
(86) International application number: PCT/JP2010/050943
(87) International publication number: WO 2010/087321

(57) **Abstract**

An ink for marking which is used for marking an outer surface of an article having at least the outer surface formed of a resin and which is excellent in friction resistance and flex resistance after marking is provided.

An ink for marking which contains an organic solvent, an oil-soluble dye and an oil-soluble resin, in which the oil-soluble resin has at least two types of acrylic resins mixed; in the aforementioned at least two types of acrylic resins, a total of an acid value and a hydroxyl value of at least one type of acrylic resin is 10 or less; and in the aforementioned at least two types of acrylic resins, a total of an acid value and an hydroxyl value of the other at least one type of resin is 70 or more.

## Description

### Technical Field

The present invention relates to an ink for marking which marks an outer surface of an article such as a covered electric wire, a connector for the covered electric wire or the like.

### Background Art

Hitherto, in this type of the ink for marking, an ink for marking which marks an outer surface of a covered electric wire for discriminating the covered electric wire constituting a wire harness has been disclosed in an automatically marking method of articles described in Patent Literature 1.

As this type of the ink, an acrylic paint, an ink (dye-based and pigment-based), a UV curing ink and the like are exemplified.

### Citation List

### Patent Literature

PTL 1: Japanese Unexamined Patent Application Publication No. 2004-134371

### Summary of Invention

### Technical Problem

In actually manufacturing a wire harness industrially, one of performances required for the ink for marking is distinguishability particularly after marking. That is, distinguishability in checking connection between a covered electric wire and a connector when the wire harness is to be assembled and distinguishability when the wire harness incorporated in an automobile or the like is removed and checked for maintenance or repair are required.

In either case, if abrasion resistance and flex resistance of the ink is insufficient during handling of the covered electric wire after marking such as friction between the covered electric wires or friction between the covered electric wire and the connector or bending of the covered electric wire in assembling or removal of the wire harness, ink for marking peels off the covered electric ire and distinguishability is lowered.

However, in the ink described in Patent Literature 1, nothing is considered for the above-mentioned friction resistance and flex resistance of the ink, which are important during handling of the covered electric wire after marking, and there is a problem that the above-mentioned performances cannot be satisfied by a usual ink.

Thus, the present invention was made in order to solve the above problems and has an object to provide an ink for marking which is used for marking an outer surface of an article having at least the outer surface formed of a resin and which is excellent in friction resistance and flex resistance after marking.

### Solution to Problem

In order to solve the aforementioned problems, the present inventors have studied intensively and, as a result, have found out that the above object may be attained by adjusting totals of acid values and hydroxyl values of a plurality of acrylic resins contained in an ink for marking as oil-soluble resins.

That is, the present invention in accordance with the description of claim 1 is an ink for marking which contains an organic solvent, an oil-soluble dye and an oil-soluble resin, in which the oil-soluble resin has at least two types of acrylic resins mixed, in the at least two types of acrylic resins, a total of an acid value and a hydroxyl value of at least one type of acrylic resin is 10 or less, and in the at least two types of acrylic resins, a total of an acid value and a hydroxyl value of the other at least one type of acrylic resin is 70 or more.

As described above, by setting the total of the acid value and the hydroxyl value within a predetermined range for each of the at least two types of acrylic resins contained in the ink for marking, friction resistance and flex resistance of the ink for marking can be both realized.

Therefore, according to the above-described configuration, the present invention can provide an ink for marking which is used for marking an outer surface of an article having at least the outer surface formed of a resin and which is excellent in friction resistance and flex resistance after marking.

Also, the present invention in accordance with the description of claim 2 is an ink for marking described in claim 1 in which the total of acid values and hydroxyl values of all the oil-soluble resins calculated by mixing ratios of the at least two types of acrylic resins is within a range of 40 to 60.

As a result, in the present invention, a working effect of the invention described in claim 1 can be further improved.

Moreover, the present invention may be configured such that, as described in claim 3, in the ink for marking described in claim 1 or 2, the acrylic resin having the total of the acid value and the hydroxyl value of 10 or less has a structural unit deriving at least from methacrylic ester or acrylic ester.

Also, the present invention may be configured such that, as described in claim 4, in an ink for marking described in any one of claims 1 to 3, an acrylic resin having the total of the acid value and the hydroxyl value of 70 or more has a structural unit deriving at least from methacrylic ester or acrylic ester and also has a polarity controlling group in the molecular structure.

Also, the present invention may be configured such that, as described in claim 5, in the ink for marking described in claim 4, the polarity controlling group may be at least one type selected from a group consisting of a carboxyl group and its salt and a hydroxyl group.

### Description of Embodiments

An embodiment of an ink for marking according to the present invention will be described below.

The ink for marking referred in this embodiment is an ink which is used for marking an outer surface of a covering member of a covered electric wire adopted as a member constituting a wire harness by an inkjet method.

The covered electric wire is constituted by covering a naked electric wire by a covering member. The covering member is manufactured by molding an electrically insulating resin having thermal plasticity by an extrusion method or the like. The electrically insulating resin includes a polyamide resin, a polyester resin, a polyvinyl chloride resin, polyolefin resin or the like. Particularly, as an electrically insulating resin adopted for a covering member of a covered electric wire, a polyvinyl chloride resin has been conventionally adopted widely.

Also, in recent years, polyolefin resin has been adopted in place of the conventional polyvinyl chloride resin in response to a demand for dehalogenation in a covered electric wire adopted for a wire harness for an automobile. Particularly, marking is difficult in a covering member adopting the polyolefin resin, and the marking is not sufficient with the conventional ink for marking.

Here, examples of the polyolefin resin include resins such as polyethylenes like low density polyethylene, medium density polyethylene, high density polyethylene or the like, and polypropylenes like homopolypropylene, block polypropylene, random polypropylene or the like.

In this embodiment, a discharge type of inkjet may be any of a drop-on-demand type and a continuous-flow-type. If the continuous-flow-type is adopted, it is necessary to add to an ink a component imparting suitable electric conductivity, but in this case, the component imparting electric conductivity must be added in such a range that the present invention may not be influenced.

Also, as the discharge system, any system such as a thermal inkjet system, a bubble jet (registered trademark) system, a piezo system, an electrostatic actuator system or the like may be adopted, for example.

In this embodiment, drying of an ink for marking after discharge by the inkjet system is not particularly limited. The drying may be done at an arbitrary temperature, that is, it may be natural drying at a room temperature or forced drying with a warm wind at a predetermined temperature, conduction, radiation or the like.

In this embodiment, the ink for marking contains an organic solvent, an oil-soluble dye and an oil-soluble resin. That is, the ink for marking is manufactured by dissolving an oil-soluble dye and an oil-soluble resin into an organic solvent. Also, the oil-soluble resin has at least two types of acrylic resins mixed.

Here, examples of the organic solvent are not limited to the following but include alcohol-based solvents such as methyl alcohol, ethyl alcohol, isopropyl alcohol, butyl alcohol, benzyl alcohol and the like; polyhydric alcohol-based solvents such as ethylene glycol, glycerin and the like; ether-based solvents such as ethylene glycol monomethyl ether, ethylene glycol monoethyl ether, dioxane, tetrahydrofuran and the like; ester-based solvents such as ethyl acetate and the like; ketone-based solvents such as acetone, methyl ethyl ketone, methyl isobutyl ketone, cyclohexanone and the like; hydrocarbon-based solvents such as n-hexane, cyclohexane, benzene, toluene, mineral spirit and the like; and nitrile-based solvents such as acetonitrile and the like. In this embodiment, acetone is particularly preferable among them.

Also, the organic solvent in the ink for marking may be used by mixing as appropriate in a relationship to the oil-soluble dye and the oil-soluble resin to be adopted.

Subsequently, examples of the oil-soluble dye are not particularly limited to the following but include, for example, C.I. Solvent Yellow 2, 13, 14, 16, 21, 25, 33, 56, 60, 88, 89, 93, 104, 105, 112, 113, 114, 157, 160, 163, C.I. Solvent Red 3, 18, 22, 23, 24, 27, 49, 52, 60, 111, 122, 125, 127, 130, 132, 135, 149, 150, 168, 179, 207, 214, 225, 233, C. I. Solvent Blue 7, 14, 25, 35, 36, 59, 63, 67, 68, 70, 78, 87, 94, 95, 132, 136, 197, C. I. Solvent Black 3, 7, 28, 29, C. I. Solvent Violet 8, 13, 31, 33, 36, C. I. Solvent Orange 11, 55, 60, 63, 80, 99, 114, C. I. Solvent Brown 42, 43, 44, C. I. Solvent Green 3, 5, 20 or the like.

Besides the oil-soluble dye, disperse dye, pigment, vat dye, basic dye or the like which is possible to be adopted to the object of the present invention may also be included. The oil-soluble dye includes, for example, C. I. Disperse Yellow 54, 82, 160, C.I. Disperse Red 22, 60, C.I. Disperse Blue 14, 197, C.I. Disperse Violet 13, 28, 31, 33, 57, C.I. Pigment Yellow 147, C.I. Pigment Red 181, C.I. Vat Red 41, C.I. Basic Blue 7 or the like. Further, it is possible to use a commercially available oil-soluble dye without a C.I. number.

Also, the oil-soluble dye in the ink for marking may be used by mixing as appropriate in accordance with a hue of desired marking. Also, an amount of the oil-soluble dye used may be determined as appropriate by color depth of marking.

Subsequently, the oil-soluble resins will be described. As described above, the ink for marking according to the present invention is manufactured by dissolving an oil-soluble dye and an oil-soluble resin into an organic solvent, and in the oil-soluble resin, at least two types of acrylic resins are mixed. Also, in the oil-soluble resin, other resins may be mixed in addition to the acrylic resin.

In this embodiment, as the acrylic resin, a homopolymer of an acrylic acid, an acrylic ester (esters such as methyl, ethyl, hydroxyethyl, propyl and the like) or methacrylic ester (esters such as methyl, ethyl, hydroxyethyl, propyl and the like) or a copolymer of two types or more or a copolymer of them and other monomers is used. The other monomers to be copolymerized include, for example, ethylene, vinyl alcohol, vinyl acetate, vinyl chloride, vinylidene chloride, styrene, butadiene, acrylonitrile, acrylamide or the like. A molecular weight of the acrylic resin is selected appropriately on the basis of a viscosity of an ink and fastness of a film or the like.

Also, the other resins to be mixed with the acrylic resin are not limited to the following but resins which are dissolved in an organic solvent used in the ink for marking and include, for example, polyamide resin, polyester resin, unsaturated polyester resin, epoxy resin, phenol resin, urethane resin, polyvinyl chloride resin, polyvinyl acetate resin, polyethylene resin, polyimide resin, polycarbonate resin, ethylene vinyl acetate copolymer resin, ethylene vinyl chloride copolymer resin, polyimide resin, urea resin, ABS resin, AS resin, NBR, SBR, polyvinyl alcohol, polyvinyl ether or the like.

As described above, in this embodiment, it is important to adjust the total of the acid value and the hydroxyl value of each acrylic resin mixed in the oil-soluble resin.

Here, the acid value of the acrylic resin refers to the number of milligrams of potassium hydroxide required to neutralize a carboxyl group (-COOH group) contained in 1 gram of the acrylic resin (reference standard: JIS K 0070). However, if the whole of or a part of the carboxyl group is in a state of its salt (-COONa, for example), once the state is returned to acid (-COOH) and then, the number of milligrams of potassium hydroxide required to neutralize that is referred to. Therefore, the acid value of the acrylic resin corresponds to the numbers of the carboxyl groups and its salt contained in the acrylic resin.

On the other hand, the hydroxyl value of the acrylic resin refers to the number of milligrams of potassium hydroxide required to neutralize acetic acid generated by acetylating and then, by hydrolyzing the hydroxyl group (-OH group) contained in 1 gram of the acrylic resin (reference standard: JIS K 0070). Therefore, the hydroxyl value of the acrylic resin corresponds to the number of hydroxyl groups (-OH group) contained in the acrylic resin.

As described above, the unit of the acid value and the unit of the hydroxyl value are the same and they can be compared with each other. Thus, the total of the acid value and the hydroxyl value corresponds to the total of the number of the carboxyl groups (-COOH group) and the salts thereof (-COONa, for example) and the number of hydroxyl groups (-OH group) contained in the acrylic resin.

Here, the carboxyl groups and the salts thereof as well as the hydroxyl groups and the like are both hydrophilic polar groups and act as polarity controlling groups in a molecular structure of the acrylic resin. If these polarity controlling groups are present in large quantity in the molecular structure of the acrylic resin, the molecular arrangement of the acrylic resin is disturbed, and as a result, flexibility is imparted to the acrylic resin.

Those acting as the polarity controlling group include carboxyl group and its salt, hydroxyl group, sulpho group, phosphate group and its salt, alkoxysilyl group and the like, but in this embodiment, the carboxyl group and its salt as well as the hydroxyl group are preferable among them.

Here, a method of introducing the polarity controlling group such as carboxyl group or its salt or the hydroxyl group or the like into the molecular structure of the acrylic resin may be any of known methods, and the group may be introduced as a polar group provided in a monomer in a polymerization stage of the acrylic resin or may be introduced by some reaction after polymerization with respect to the acrylic resin obtained by the polymerization, for example.

The former methods include a method of polymerization using an acrylic acid or an acrylate as a monomer in polymerization of an acrylic resin and of introducing the carboxyl group or its salt as a polar group of the structural unit deriving from the acrylic acid or the acrylate, for example.

On the other hand, the latter methods include a method of polymerization using acrylic ester or vinyl acetate as a monomer in polymerization of an acrylic resin and then, of saponification of the whole of or a part of the acrylic ester or vinyl acetate contained in the resin after the polymerization and of introducing the carboxyl group or its salt or the hydroxyl group.

Here, the molecular structure of the acrylic resin may be a linear polymer or branched polymer. Also, the polarity controlling group such as carboxyl group or its salt or hydroxyl group or the like introduced into the molecular structure of the acrylic resin may be introduced into a main chain of the acrylic resin or may be introduced into a branched chain. Also, the polarity controlling group may be introduced into the inside of the molecular structure of the acrylic resin or may be introduced into a molecular end. Moreover, the hydroxyl group may be directly introduced into the main chain or the branched chain of the acrylic resin or may be introduced into the main chain or the branched chain as a hydroxyalkyl group or the like through an alkyl group or the like.

In this embodiment, in the at least two types of acrylic resins mixed in the oil-soluble resin, the total of the acid value and the hydroxyl value of at least one type of acrylic resin is 10 or less or preferably 5 or less. This indicates that there are few polarity controlling groups in the acrylic resin and the molecular arrangement of the acrylic resin is not disturbed. That is, it is indicated that the acrylic resin is an acrylic resin, which maintains hardness.

Such an acrylic resin is an acrylic resin in which an operation of introducing the polarity controlling group such as the carboxyl group or its salt or the hydroxyl group or the like into the molecular structure is not actively performed or performed only extremely slightly. In this embodiment, among the aforementioned acrylic resins, an acrylic resin having a structural unit deriving from methacrylic ester or acrylic ester is preferable. That is, the aforementioned acrylic resin is an acrylic resin in which a main molecular structure is a structural unit deriving at least from methacrylic ester or acrylic ester, and since there are only a few polarity controlling groups in the molecular structure, the molecular arrangement is not disturbed, and hardness is maintained.

The acrylic resin having the total of the acid value and the hydroxyl value of 10 or less has favorable adhesion properties to an electrically insulating resin adopted for a covering member of a covered electric wire, and an effect of improving friction resistance of a marked portion is great. Moreover, the acrylic resin having the total of the acid value and the hydroxyl value of 5 or less has favorable adhesion properties to a polyolefin resin and the effect of improving the friction resistance of a marked portion of the polyolefin resin is greater.

On the other hand, in this embodiment, in at least two types of acrylic resins mixed in the aforementioned oil-soluble resin, among the acrylic resins other than the aforementioned acrylic resin having the total of the acid value and the hydroxyl value of 10 or less, the total of the acid value and the hydroxyl value of at least one type of acrylic resin is 70 or more. This indicates that a large amount of the polarity controlling groups are introduced into the aforementioned acrylic resin and the molecular arrangement of the acrylic resin is largely disturbed. That is, the aforementioned acrylic resin is a flexible acrylic resin.

Such an acrylic resin is an acrylic resin in which an operation of introducing the polarity controlling group such as the carboxyl group or its salt or the hydroxyl group or the like into the molecular structure is performed actively. In this embodiment, among the aforementioned acrylic resins, an acrylic resin having a structural unit deriving at least from methacrylic ester or acrylic ester and having at least one type selected from a group consisting of the carboxyl group and its salt as well as the hydroxyl group as a polarity controlling group in the molecular structure is preferable. That is, the aforementioned acrylic resin has a structure unit deriving from methacrylic ester or acrylic ester as its main molecular structure, and since there are many polarity controlling groups in the molecular structure, the molecular arrangement is largely disturbed, and the acrylic resin is a flexible acrylic resin.

If these acrylic resins having the total of the acid value and the hydroxyl value of 70 or more are used singularly, adhesion properties to an electrically insulating resin adopted for a covering member of a covered electric wire is not so preferable, but when it is used at the same time with the aforementioned acrylic resin having the total of the acid value and the hydroxyl value of 10 or less, it acts as a component to make the entire oil-soluble resin contained in the ink for marking flexible and particularly has a great effect of improving flex resistance without lowering friction resistance of a marked portion.

As described above, in the oil-soluble resin contained in the ink for marking according to this embodiment, in order to improve adhesion properties to the electrically insulating resin adopted for a covering member of a covered electric wire and friction resistance, the acrylic resin having the total of the acid value and the hydroxyl value of 10 or less is mixed, and on the other hand, in order to improve flex resistance without lowering friction resistance of the oil-soluble resin, the acrylic resin having the total of the acid value and the hydroxyl value of 70 or more is mixed. As a result, the ink for marking can realize both friction resistance and flex resistance.

Moreover, in this embodiment, the total of the acid values and the hydroxyl values of the entire oil-soluble resin calculated from each mixing ratio of at least two types of acrylic resins mixed in the aforementioned oil-soluble resin is preferably within a range of 40 to 60. If the total of the acid values and the hydroxyl values of the entire oil-soluble resin is 40 or less, flex resistance might become somewhat lower than those within the range of 40 to 60. On the contrary, if the total of the acid values and the hydroxyl values of the entire oil-soluble resin is 60 or more, friction resistance might be lower than that with the total within the range of 40 to 60.

Therefore, if the total of the acid values and the hydroxyl values of the entire oil-soluble resin is within the range of 40 to 60, a balance between the friction resistance and the flex resistance becomes favorable, and a working effect of the present invention can be further improved.

With respect to the above, as an oil-soluble resin contained in the ink for marking, a single acrylic resin having the total of the acid value and the hydroxyl value larger than 10 and smaller than 70 might be used. Moreover, a single acrylic resin having the total of the acid value and the hydroxyl value within the range of 40 to 60 might be used. However, in these cases, friction resistance and flex resistance both become insufficient, and the object of the present invention cannot be achieved.

Also, a use amount of each of the aforementioned acrylic resins can be determined as appropriate by friction resistance and flex resistance that can be acquired from viscosity of the ink for marking, a hue and a color density of the marking and the like.

The ink for marking according to this embodiment has its viscosity preferably within a range of 0.3 to 3.5 (mPa·s). If the viscosity of the ink for marking is within the above range, stability of the ink when being injected from an inkjet nozzle becomes further favorable.

As a result, according to this embodiment, an ink for marking used for marking an outer surface of a covering member of a covered electric wire which is excellent in friction resistance and flex resistance after marking can be provided.

As a result, the ink for marking does not peel off the outer surface during handling of the covered electric wire after marking due to friction between the covered electric wires and friction between the covered electric wire and a connector or bending of the covered electric wire during assembling or removal of a wire harness and the like, and distinguishability of a marked portion becomes favorable.

Also, even in a covering member of a covered electric wire adopting a polyolefin resin for which sufficient marking could not be made with the prior-art ink for marking, the ink for marking excellent in friction resistance and flex resistance after marking can be provided.

### Examples

As for an ink for marking according to the present invention, inks of each of examples and each of comparative examples against them were manufactured and their performances were evaluated. The present invention is not limited by these examples.

### Example 1 to Example 3:

### A. Preparation of oil-soluble resin

As an acrylic resin having a total of an acid value and a hydroxyl value of 10 or less and mixed in the oil-soluble resin, a polymer A (by Mitsubishi Rayon Co., Ltd., DIANAL BR113) was prepared. The polymer A is a resin having a structural unit deriving mainly from methacrylic ester and is a resin which is solid at a room temperature, having a molecular weight of 30,000, a glass transition point (Tg) of 75°C, an acid value of 3.5, and a hydroxyl value of zero. Thus, this is an acrylic resin having the total of the acid value and the hydroxyl value of 3.5.

As an acrylic resin having the total of the acid value and the hydroxyl value of 70 or more and mixed in the oil-soluble resin, a polymer B (by Soken Chemical and Engineering Co., Ltd., ACTFLOW UME-2005) was prepared. The polymer B is a resin having a structural unit deriving mainly from acrylic ester and also having a hydroxyl group as a polarity controlling group and is a resin which is a liquid resin at a room temperature, having a molecular weight of 3,000, an acid value of zero, a hydroxyl value of 89.6, and viscosity of 15,000 to 20,000 (mPa·s). Thus, this is an acrylic resin having the total of the acid value and the hydroxyl value of 89.6.

On the other hand, for comparison, as an acrylic resin having a total of an acid value and a hydroxyl value neither of 10 or less nor 70 or more and mixed in the oil-soluble resin, a polymer C (by Seiko PMC Corporation, Hi-Ros X·HE-1018) was prepared. The polymer C is a resin having a structural unit deriving mainly from acrylic ester and styrene and also having a salt of a carboxyl group as a polarity controlling group and was a resin in an emulsion state having an effective component of 51%. Molecular weight measurement of a resin in the emulsion state was difficult, a glass transition point (Tg) was 75°C as a theoretical value, an apparent acid value in the emulsion state was 23.0, and a hydroxyl value was zero. Thus, in the effective component equivalent, the polymer C is handled as an acrylic resin having the total of the acid value and the hydroxyl value of 45.1.

### B. Preparation of ink for marking

By using 1 g of C.I. Solvent Blue 70 as an oil-soluble dye and 3 g of the polymer A and 3 g of the polymer B as the oil-soluble resin, they were sufficiently stirred and dissolved in an acetone solvent so as to have a full amount of 100 g and then, filtered by a 1.0 µm membrane filter and a blue ink for marking in Example 1 was obtained. The ink for marking in Example 1 contains both the acrylic resin (polymer A) having the total of the acid value and the hydroxyl value of 10 or less and the acrylic resin (polymer B) having the total of the acid value and the hydroxyl value of 70 or more.

Also, except that the use amount of the polymer A or the polymer B was changed from that in Example 1, blue ink for marking each for Example 2 and Example 3 was obtained by the same operation as that in Example 1. As for each of the inks for marking in Example 1 to Example 3, the use amounts of the oil-soluble dye and the oil-soluble resin used in them and the total value of the acid values and the hydroxyl values of the entire oil-soluble resin (acid values + hydroxyl values) are shown in Table 1.

On the other hand, for comparison, by using 1 g of C.I. Solvent Blue 70 as an oil-soluble dye and 3 g of the polymer A as the oil-soluble resin without using the polymer B, blue ink for marking in Comparative Example 1 was obtained by the same operation as that in Example 1. The ink for marking in Comparative Example 1 contains an acrylic resin (polymer A) having the total of the acid value and the hydroxyl value of 10 or less but does not contain an acrylic resin having the total of the acid value and the hydroxyl value of 70 or more.

Also, by using the use amounts of the oil-soluble dye and the oil-soluble resin shown in Table 1, the blue ink for marking in each of Comparative Example 2 to Comparative Example 8 was obtained by the same operation as that in Example 1. Comparative Example 2 does not contain an acrylic resin having the total of the acid value and the hydroxyl value of 70 or more similarly to Comparative Example 1. To the contrary to Comparative Example 1, Comparative Example 3 and Comparative Example 4 contain the acrylic resin (polymer B) having he total of the acid value and the hydroxyl value of 70 or more but does not contain the acrylic resin having the total of the acid value and the hydroxyl value of 10 or less. Comparative Example 5 contains the acrylic resin (polymer A) having the total of the acid value and the hydroxyl value of 10 or less but does not contain the acrylic resin having the total of the acid value and the hydroxyl value of 70 or more and instead contains an acrylic resin (polymer C) having the total of the acid value and the hydroxyl value of 45.1. Comparative Example 6 and Comparative Example 7 contain the acrylic resin (polymer B) having the total of the acid value and the hydroxyl value of 70 or more but does not contain the acrylic resin having the total of the acid value and the hydroxyl value of 10 or less and instead contains the acrylic resin (polymer C) having the total of the acid value and the hydroxyl value of 45.1. Comparative Example 8 does not contain either of the acrylic resin having the total of the acid value and the hydroxyl value of 10 or less or the acrylic resin having the total of the acid value and the hydroxyl value of 70 or more but instead, contains the acrylic resin (polymer C) having the total of the acid value and the hydroxyl value of 45.1. As for each ink for marking in Comparative Example 1 to Comparative Example 8, the use amounts of the oil-soluble dye and the oil-soluble resin used in them and the total value of the acid values and the hydroxyl values (acid values + hydroxyl values) of the entire oil-soluble resin are shown in Table 1. In Table 1, the use amount of the polymer C is a value in the effective component equivalent.

**[Table 1]**

| | Oil-soluble dye | Acrylic resin | | | Acid value + hydroxyl value of entire oil-soluble resin |
|---|---|---|---|---|---|
| | C.I. Solvent Blue 70 | Polymer A, acid value = 3.5 | Polymer B, hydroxyl value = 89.6 | Polymer C, acid value = 45.1 | |
| Example 1 | 1 % | 3% | 3% | 0 | 46.6 |
| Example 2 | 1 % | 3% | 4.5% | 0 | 55.2 |
| Example 3 | 1 % | 6% | 3% | 0 | 32.2 |
| Comparative Example 1 | 1 % | 3% | 0 | 0 | 3.5 |
| Comparative Example 2 | 1 % | 6% | 0 | 0 | 3.5 |
| Comparative Example 3 | 1 % | 0 | 3% | 0 | 89.6 |
| Comparative Example 4 | 1 % | 0 | 6% | 0 | 89.6 |
| Comparative Example 5 | 1 % | 3% | 0 | 3% | 24.3 |
| Comparative Example 6 | 1 % | 0 | 1.5% | 4 % | 57.2 |
| Comparative Example 7 | 1 % | 0 | 3% | 3% | 67.4 |
| Comparative Example 8 | 1 % | 0 | 0 | 5% | 45.1 |

### Example 4 to Example 7:

### A. Preparation of oil-soluble resin

As an acrylic resin having a total of an acid value and a hydroxyl value of 10 or less and mixed in the oil-soluble resin, a polymer D (by Mitsubishi Rayon Co., Ltd., DIANAL BR64) was prepared. The polymer D is a resin having a structural unit deriving mainly from methacrylic ester and is a resin, which is solid at a room temperature, having a molecular weight of 65,000, a glass transition point (Tg) of 55°C, an acid value of 2.0, and a hydroxyl value of zero. Thus, this is an acrylic resin having the total of the acid value and the hydroxyl value of 2.0.

As an acrylic resin having the total of the acid value and the hydroxyl value of 70 or more and mixed in the oil-soluble resin, a polymer E (by Seiko PMC Corporation, Hi-Ros X·F-52) was prepared. The polymer E is a resin having a structural unit deriving mainly from acrylic ester and also having a salt of a carboxyl group as a polarity controlling group and is a resin in an emulsion state having an effective component of 40.5%. Molecular weight measurement of a resin in the emulsion state was difficult, a glass transition point (Tg) was 0°C as a theoretical value, an apparent acid value in the emulsion state was 31.0, and a hydroxyl value was zero. Thus, in the effective component equivalent, the polymer E is handled as an acrylic resin having the total of the acid value and the hydroxyl value of 76.5.

On the other hand, for comparison, as an acrylic resin having a total of an acid value and a hydroxyl value neither of 10 or less nor 70 or more and mixed in the oil-soluble resin, the polymer C (by Seiko PMC Corporation, Hi-Ros X·HE-1018) used for the manufacture of the inks for marking in Comparative Example 5 to Comparative Example 7 was prepared. As described above, according to conversion on the basis of the effective component, the polymer C is handled as an acrylic resin having the total of the acid value and the hydroxyl value of 45.1.

### B. Preparation of ink for marking

By using 1 g of C.I. Solvent Red 233 as an oil-soluble dye and 2 g of the polymer D and 2.4 g of the polymer E in the effective component equivalent as the oil-soluble resin, they were sufficiently stirred and dissolved in an acetone solvent so as to have a full amount of 100 g and then, filtered by a 1.0 µm membrane filter and a red ink for marking in Example 4 was obtained. The ink for marking in Example 4 contains both the acrylic resin (polymer D) having the total of the acid value and the hydroxyl value of 10 or less and the acrylic resin (polymer E) having the total of the acid value and the hydroxyl value of 70 or more.

Also, except that the use amount of the polymer D or the polymer E was changed from those in Example 4, red ink for marking each for Example 5 and Example 6 was obtained by the same operation as that in Example 1. Moreover, by using 1 g of the polymer D, 3 g of the polymer E in the effective component equivalent, and 2 g of the acrylic resin (polymer C) having the total of the acid value and the hydroxyl value of 45.1 in the effective component equivalent, red ink for marking in Example 7 was obtained by the same operation as that in Example 1. As for each of the inks for marking in Example 4 to Example 7, the use amounts of the oil-soluble dye and the oil-soluble resin used in them and the total value of the acid values and the hydroxyl values of the entire oil-soluble resin (acid values + hydroxyl values) are shown in Table 2. In Table 2, the use amounts of the polymer E and the polymer C are values in the effective component equivalent.

On the other hand, for comparison, by using 1 g of C.I. Solvent Red 233 as an oil-soluble dye and 3 g of the polymer D as the oil-soluble resin without using the polymer E and the polymer C, red ink for marking in Comparative Example 9 was obtained by the same operation as that in Example 4. The ink for marking in Comparative Example 9 contains an acrylic resin (polymer D) having the total of the acid value and the hydroxyl value of 10 or less but does not contain an acrylic resin having the total of the acid value and the hydroxyl value of 70 or more.

Also, by using the use amounts of the oil-soluble dye and the oil-soluble resin shown in Table 2, the red ink for marking in each of Comparative Example 10 to Comparative Example 14 was obtained by the same operation as that in Example 4. Comparative Example 10 does not contain an acrylic resin having the total of the acid value and the hydroxyl value of 70 or more similarly to Comparative Example 9. To the contrary to Comparative Example 9, Comparative Example 11 and Comparative Example 12 contain the acrylic resin (polymer E) having the total of the acid value and the hydroxyl value of 70 or more but do not contain the acrylic resin having the total of the acid value and the hydroxyl value of 10 or less. Comparative Example 13 and Comparative Example 14 contain the acrylic resin (polymer D) having the total of the acid value and the hydroxyl value of 10 or less but do not contain the acrylic resin having the total of the acid value and the hydroxyl value of 70 or more and instead contain an acrylic resin (polymer C) having the total of the acid value and the hydroxyl value of 45.1. As for each ink for marking in Comparative Example 9 to Comparative Example 14, the use amounts of the oil-soluble dye and the oil-soluble resin used in them and the total value of the acid values and the hydroxyl values (acid values + hydroxyl values) of the entire oil-soluble resin are shown in Table 2. In Table 2, the use amounts of the polymer E and the polymer C are values in the effective component equivalent.

**[Table 2]**

| | Oil-soluble dye | Acrylic resin | | | Acid value + hydroxyl value of entire oil-soluble resin |
|---|---|---|---|---|---|
| | C.I. Solvent Red 233 | Polymer D, acid value = 2.0 | Polymer E, hydroxyl value = 76.5 | Polymer C, acid value = 45.1 | |
| Example 4 | 1% | 2% | 2.4% | 0 | 42.6 |
| Example 5 | 1% | 1.5% | 3.6% | 0 | 54.6 |
| Example 6 | 1% | 3% | 1.8% | 0 | 29.9 |
| Example 7 | 1% | 1% | 3% | 2% | 53.6 |
| Comparative Example 9 | 1% | 3% | 0 | 0 | 2.0 |
| Comparative Example 10 | 1% | 5% | 0 | 0 | 2.0 |
| Comparative Example 11 | 1% | 0 | 3% | 0 | 76.5 |
| Comparative Example 12 | 1% | 0 | 5% | 0 | 76.5 |
| Comparative Example 13 | 1 % | 2% | 0 | 4% | 30.7 |
| Comparative Example 14 | 1 % | 3% | 0 | 3% | 23.6 |

### Example 8 to Example 15:

### A. Preparation of oil-soluble resin

As an acrylic resin having a total of an acid value and a hydroxyl value of 10 or less and mixed in the oil-soluble resin, the polymer D (by Mitsubishi Rayon Co., Ltd., DIANAL BR64) used for the manufacture of the inks for marking in Example 4 to Example 7 was prepared. As described above, the polymer D is an acrylic resin having the total of the acid value and the hydroxyl value of 2.0.

As an acrylic resin having the total of the acid value and the hydroxyl value of 70 or more and mixed in the oil-soluble resin, two types of polymer, that is, a polymer B (by Soken Chemical and Engineering Co., Ltd., ACTFLOW UME-2005) used in manufacture of the ink for marking in Example 1 to Example 3 and the polymer E (by Seiko PMC Corporation, Hi-Ros X·F-52) used for manufacture of the inks for marking in Example 4 to Example 7 were prepared. As described above, the polymer B is an acrylic resin having the total of the acid value and the hydroxyl value of 89.6, and the polymer E is handled as an acrylic resin having the total of the acid value and the hydroxyl value of 76.5 in the effective component equivalent.

### B. Preparation of ink for marking

By using 1 g of C.I. Solvent Violet 33 as an oil-soluble dye and 1 g of the polymer D, 1 g of the polymer B, and 1.2 g of the polymer E in the effective component equivalent as the oil-soluble resin, they were sufficiently stirred and dissolved in an acetone solvent so as to have a full amount of 100 g and then, filtered by a 1.0 µm membrane filter and a violet ink for marking in Example 8 was obtained. The ink for marking in Example 8 contains both the acrylic resin (polymer D) having the total of the acid value and the hydroxyl value of 10 or less and the acrylic resins (polymer B and polymer E), each having the total of the acid value and the hydroxyl value of 70 or more.

Also, except that each use amount of the polymer D, the polymer B or the polymer E was changed from those in Example 8, violet inks for marking each for Example 9 to Example 15 were obtained by the same operation as that in Example 8. As for each of the inks for marking in Example 8 to Example 15, the use amounts of the oil-soluble dye and the oil-soluble resin used in them and the total value of the acid values and the hydroxyl values of the entire oil-soluble resins (acid values + hydroxyl values) are shown in Table 3. In Table 3, the use amount of the polymer E is a value in the effective component equivalent.

On the other hand, for comparison, by using 1 g of C.I. Solvent Violet 33 as an oil-soluble dye, 3 g of the polymer B, and 1.2 g of the polymer E in the effective component equivalent, violet ink for marking in Comparative Example 15 was obtained by the same operation as that in Example 8 without using the polymer D. The ink for marking in Comparative Example 15 contains an acrylic resin (polymer B and polymer E) having the total of the acid value and the hydroxyl value of 70 or more but does not contain an acrylic resin having the total of the acid value and the hydroxyl value of 10 or less. As for the ink for marking in Comparative Example 15, the use amounts of the oil-soluble dye and the oil-soluble resin used in this and the total value of the acid values and the hydroxyl values of the entire oil-soluble resin (acid values + hydroxyl values) are shown in Table 3. In Table 3, the use amount of the polymer E is a value in the effective component equivalent.

**[Table 3]**

| | Oil-soluble dye | Acrylic resin | | | Acid value + hydroxyl value of entire oil-soluble resin |
|---|---|---|---|---|---|
| | C.I. Solvent Violet 33 | Polymer D, acid value = 2.0 | Polymer B, hydroxyl value= 89.6 | Polymer E, acid value = 76.5 | |
| Example 8 | 1% | 1% | 1% | 1.2 % | 57 3 |
| Example 9 | 1% | 1% | 2% | 1.2 % | 65.0 |
| Example 10 | 1% | 1% | 3% | 1.2 % | 69.7 |
| Example 11 | 1% | 2 % | 1% | 1.2 % | 44.1 |
| Example 12 | 1 % | 2 % | 2 % | 1.2 % | 52.9 |
| Example 13 | 1% | 2 % | 3% | 1.2% | 58.8 |
| Example 14 | 1 % | 1% | 1 % | 1. 5% | 59.0 |
| Example 15 | 1 % | 3% | 1 % | 1% | 34.4 |
| Comparative Example 15 | 1% | 0 | 3% | 1.2% | 85.9 |

### Example 16 to Example 18:

### A. Preparation of oil-soluble resin

As an acrylic resin having a total of an acid value and a hydroxyl value of 10 or less and mixed in the oil-soluble resin, a polymer F (by Mitsubishi Rayon Co., Ltd., DIANAL BR116) was prepared. The polymer F is a resin having a structural unit deriving mainly from methacrylic ester and is a resin, which is solid at a room temperature, having a molecular weight of 45,000, a glass transition point (Tg) of 50°C, an acid value of 7.0, and a hydroxyl value of zero. Thus, this is an acrylic resin having the total of the acid value and the hydroxyl value of 7.0.

Also, as an acrylic resin having the total of the acid value and the hydroxyl value of 70 or more and mixed in the oil-soluble resin, two types of resin, that is, the polymer B (by Soken Chemical and Engineering Co., Ltd., ACTFLOW UME-2005) used for manufacture of the inks for marking in Example 1 to Example 3 and Example 8 to Example 15 and the polymer E (by Seiko PMC Corporation, Hi-Ros X·F-52) used for manufacture of inks for marking in Example 4 to Example 7 and Example 8 to Example 15 were prepared. As described above, the polymer B is an acrylic resin having the total of the acid value and the hydroxyl value of 89.6, and the polymer E is handled as an acrylic resin having the total of the acid value and the hydroxyl value of 76.5 in the effective component equivalent.

### B. Preparation of ink for marking

By using 1 g of C.I. Solvent Violet 33 as an oil-soluble dye and 1.5 g of the polymer F, 1.5 g of the polymer B, and 1.5 g of the polymer E in the effective component equivalent as the oil-soluble resin, they were sufficiently stirred and dissolved in an acetone solvent so as to have a full amount of 100 g and then, filtered by a 1.0 µm membrane filter and a violet ink for marking in Example 16 was obtained. The ink for marking in Example 16 contains both the acrylic resin (polymer F) having the total of the acid value and the hydroxyl value of 10 or less and the acrylic resins (polymer B and polymer E), each having the total of the acid value and the hydroxyl value of 70 or more.

Also, except that each use amount of the polymer F, the polymer B or the polymer E was changed from those in Example 16, violet inks for marking each for Example 17 and Example 18 were obtained by the same operation as that in Example 16. As for each of the inks for marking in Example 16 to Example 18, the use amounts of the oil-soluble dye and the oil-soluble resin used in them and the total value of the acid values and the hydroxyl values of the entire oil-soluble resins (acid values + hydroxyl values) are shown in Table 4. In Table 4, the use amount of the polymer E is a value in the effective component equivalent.

On the other hand, for comparison, by using 1 g of C.I. Solvent Violet 33 as an oil-soluble dye, 3 g of the polymer F as the oil-soluble resin and without using the polymer B and the polymer E, violet ink for marking in Comparative Example 16 was obtained by the same operation as that in Example 16. The ink for marking in Comparative Example 16 contains an acrylic resin (polymer F) having the total of the acid value and the hydroxyl value of 10 or less but does not contain an acrylic resin having the total of the acid value and the hydroxyl value of 70 or more.

Also, by using the use amounts of the oil-soluble dye and the oil-soluble resin shown in Table 4, the violet inks for marking in each of Comparative Example 17 and Comparative Example 18 were obtained by the same operation as that in Example 16. Comparative Example 17 does not contain an acrylic resin having the total of the acid value and the hydroxyl value of 70 or more similarly to Comparative Example 16. To the contrary to Comparative Example 16, Comparative Example 18 contains the acrylic resins (polymer B and polymer E) having the total of the acid value and the hydroxyl value of 70 or more but does not contain the acrylic resin having the total of the acid value and the hydroxyl value of 10 or less. As for each of the inks for marking in Comparative Example 16 to Comparative Example 18, the use amounts of the oil-soluble dye and the oil-soluble resin used in them and the total value of the acid values and the hydroxyl values of the entire oil-soluble resins (acid values + hydroxyl values) are shown in Table 4. In Table 4, the use amount of the polymer E is a value in the effective component equivalent.

**[Table 4]**

| | Oil-soluble dye | Acrylic resin | | | Acid value + hydroxyl value of entire oil-soluble resin |
|---|---|---|---|---|---|
| | C.I. Solvent Violet 33 | Polymer F, acid value = 7.0 | Polymer B, hydroxyl value = 89.6 | Polymer E, acid value = 76.5 | |
| Example 16 | 1% | 1.5% | 1.5% | 1.5% | 57.7 |
| Example 17 | 1% | 3% | 0 | 3% | 48.3 |
| Example 18 | 1% | 3% | 3% | 0 | 41.8 |
| Comparative Example 16 | 1 % | 3% | 0 | 0 | 7.0 |
| Comparative Example 17 | 1 % | 5% | 0 | 0 | 7.0 |
| Comparative Example 18 | 1% | 0 | 3% | 3% | 83.1 |

Subsequently, as for each of the inks for marking in Example 1 to Example 18 and Comparative Example 1 to Comparative Example 18, the performances thereof were evaluated. The evaluation was made for friction resistance and flex resistance after marking by marking a covered electric wire using each of the aforementioned inks for marking. Each of methods for the marking test, the friction resistance test and the flex resistance test will be described below.

### Marking test:

By using a piezo-type inkjet device (nozzle diameter: 0.1 mm), each ink for marking was discharged to a white outer surface of a covering member of a polyolefin-resin covered electric wire (outer diameter: 1.3 mm) and dried at a room temperature. On the marking portion, a line having a width of approximately 3 mm is marked on the entire periphery of the perpendicular direction to the axis of the covered electric wire. A discharge amount of the ink to the line is approximately 40 µl, and the thickness of a film of the marking portion after being dried is approximately 2 µm.

### Friction resistance test:

One covered electric wire after marking was placed horizontally, a 20-mm-square white felt test piece was placed on the marking portion, and this was pressurized from above with a force of 20 N. In this state, the marking portion was abraded for 20 reciprocal movements with amplitude of 20 mm in the electric-wire axial direction. The state of the marking portion after abrasion and the state of the felt test piece were visually observed and evaluated in three stages of good, fair and poor described below. The evaluation was made for three covered electric wires, and the worst result was made an evaluation result.
Good: The marking portion was maintained, and little peeling-off or extension (extension of the ink to the white portion caused by scratch of the abrasion), transfer to the felt test piece or the like was found, and the mark can be distinguished easily.
Fair: Some peeling-off or extension (extension of the ink to the white portion caused by scratch of the abrasion) was found in the marking portion, and the ink has transferred to the felt, but the mark can be distinguished.
Poor: There were extreme peeling-off or extension (extension of the ink to the white portion caused by scratch of the abrasion) on the marking portion, and discrimination of the mark is difficult.

### Flex resistance test:

One covered electric wire after marking was inserted between two pins (nails) fixed perpendicularly on a flat plate at an interval of 2 mm and bent to right and left by 180° each so that the marking portion became a bending point. This operation was repeated five times and then, the covered electric wire after bending was removed from between the two pins (nails) and in a state in which the marking portion of the covered electric wire is held between the thumb and the forefinger, the covered electric wire is pulled out with a force of 5N in the direction of the electric-wire axis and rubbed between the fingers.
This operation was repeated five times and then, the state of the marking portion was visually observed and evaluated in three stages of good, fair and poor described below. The evaluation was made for three covered electric wires, and the worst result was made an evaluation result.
Good: The marking portion was maintained, and no breakage, peeling-off or transfer to the fingers was found, and the mark can be distinguished easily.
Fair: No breakage or peeling-off was found on the marking portion, but cracks or bending lines were partially found and transfer to the fingers was also found. However, the mark can be distinguished.
Poor: There was breakage or peeling-off of the marking portion, removal caused by friction by the fingers was extreme, and discrimination of the mark is difficult.

The evaluation results of the friction resistance test and the flex resistance test conducted as above are shown in Table 5. For both of the two evaluation results of the friction resistance test and the flex resistance test, good and fair results were considered as acceptable and poor results as non-acceptable.

Also, in Table 5, as for each ink for marking, inclusion of the acrylic resin with the total of the acid value and the hydroxyl value of 10 or less and the acrylic resin with the total of the acid value and the hydroxyl value of 70 or more among the acrylic resins used in the ink for marking and the total value of the acid values and the hydroxyl values (acid values + hydroxyl values) of the entire oil-soluble resin are shown.

**[Table 5]**

| | Acid value + hydroxyl value of acrylic resin | | Acid value + hydroxyl value of entire oil-soluble resin | Evaluation | |
|---|---|---|---|---|---|
| | Resin with 10 or less | Resin with 70 or more | | Friction resistance | Flex resistance |
| Example 1 | Contained | Contained | 46.6 | Good | Good |
| Example 2 | Contained | Contained | 55.2 | Good | Good |
| Example 3 | Contained | Contained | 32.2 | Good | Fair |
| Comparative Example 1 | Contained | None | 3.5 | Good | Poor |
| Comparative Example 2 | Contained | None | 3.5 | Good | Poor |
| Comparative Example 3 | None | Contained | 89.6 | Poor | Good |
| Comparative Example 4 | None | Contained | 89.6 | Poor | Good |
| Comparative Example 5 | Contained | None | 24.3 | Good | Poor |
| Comparative Example 6 | None | Contained | 57.2 | Fair | Poor |
| Comparative Example 7 | None | Contained | 67.4 | Poor | Fair |
| Comparative Example 8 | None | None | 45.1 | Poor | Poor |
| Example 4 | Contained | Contained | 42.6 | Good | Good |
| Example 5 | Contained | Contained | 54.6 | Good | Good |
| Example 6 | Contained | Contained | 29.9 | Good | Fair |
| Example 7 | Contained | Contained | 53.6 | Good | Good |
| Comparative Example 9 | Contained | None | 2.0 | Good | Poor |
| Comparative Example 10 | Contained | None | 2.0 | Good | Poor |
| Comparative Example 11 | None | Contained | 76.5 | Poor | Good |
| Comparative Example 12 | None | Contained | 76.5 | Poor | Good |
| Comparative Example 13 | Contained | None | 30.7 | Good | Poor |
| Comparative Example 14 | Contained | None | 23.6 | Good | Poor |
| Example 8 | Contained | Contained | 57.3 | Good | Good |
| Example 9 | Contained | Contained | 65.0 | Fair | Good |
| Example 10 | Contained | Contained | 69.7 | Fair | Good |
| Example 11 | Contained | Contained | 44.1 | Good | Good |
| Example 12 | Contained | Contained | 52.9 | Good | Good |
| Example 13 | Contained | Contained | 58.8 | Good | Good |
| Example 14 | Contained | Contained | 59.0 | Good | Good |
| Example 15 | Contained | Contained | 34.4 | Good | Fair |
| Comparative Example 15 | None | Contained | 85.9 | Poor | Good |
| Example 16 | Contained | Contained | 57.7 | Fair | Good |
| Example 17 | Contained | Contained | 48.3 | Good | Fair |
| Example 18 | Contained | Contained | 41.8 | Good | Fair |
| Comparative Example 16 | Contained | None | 7.0 | Good | Poor |
| Comparative Example 17 | Contained | None | 7.0 | Good | Poor |
| Comparative Example 18 | None | Contained | 83.1 | Poor | Good |

According to Table 5, each ink for marking in Example 1 to Example 18 is an ink in which an acrylic resin having the total of the acid value and the hydroxyl value of 10 or less and an acrylic resin having the total of the acid value and the hydroxyl value of 70 or more are mixed as an oil-soluble resin contained in each of them. It is known that each of the inks for marking according to these Examples is excellent in friction resistance and flex resistance after marking, the ink for marking does not peel off the outer surface of the covered electric wire, and distinguishability of the marking portion is favorable.

As compared with these Examples, each ink for marking in Comparative Example 1 to Comparative Example 18 is not sufficient in either of the performances of friction resistance and flex resistance, and the evaluation results are poor.

Also, in the aforementioned Example 1 to Example 18, inks for marking in Examples 1, 2, 4, 5, 7, 8, 11, 12, 13, and 14 are inks for marking in which an acrylic resin having the total of the acid value and the hydroxyl value of 5 or less and an acrylic resin having the total of the acid value and the hydroxyl value of 70 or more are mixed, and moreover, the total of the acid values and the hydroxyl values of the entire oil-soluble resin is within the range of 40 to 60. These inks for marking demonstrated good results in both in the evaluations of the friction resistance and the flex resistance after marking on the polyolefin-resin covered electric wire, and it is known that the advantages of the present invention are recognized further favorably.

That is, it is known that each of the inks for marking in the aforementioned Examples 1, 2, 4, 5, 7, 8, 11, 12, 13, and 14 is excellent in the friction resistance and the flex resistance in a covering material of a covered electric wire adopting a polyolefin resin for which sufficient marking could not be made with the prior-art ink for marking and has favorable distinguishability in the marked portion without removal of the ink for marking from the outer surface.

In putting the present invention into practice, the following various variations are possible without being limited by the aforementioned examples.
(1) In addition to a covered electric wire adopted as a member constituting a wire harness, the present invention can be also used for marking of articles including a connector, a tube, a tape, a cover, a clip and the like.
(2) The present invention may be adopted as a wire harness for a building, housing and the like in addition to a wire harness for an automobile.
(3) The ink for marking according to the present invention may be also used in various imparting methods including application by a roller, immersion imparting by a dip method and the like in addition to the use in the inkjet method.

## Claims

1. An ink for marking which contains an organic solvent, an oil-soluble dye and an oil-soluble resin, **characterized in that**
said oil-soluble resin has at least two types of acrylic resins mixed;
in said at least two types of acrylic resins, a total of an acid value and a hydroxyl value of at least one type of acrylic resin is 10 or less; and
in said at least two types of acrylic resins, a total of an acid value and an hydroxyl value of the other at least one type of acrylic resin is 70 or more.

2. The ink for marking according to claim 1, wherein the total of the acid value and the hydroxyl value of the entirety of said oil-soluble resin calculated from each mixing ratio of said at least two types of acrylic resins is within a range of 40 to 60.

3. The ink for marking according to claim 1 or 2, wherein
said acrylic resin having the total of the acid value and the hydroxyl value of 10 or less has a structural unit deriving at least from methacrylic ester or acrylic ester.

4. The ink for marking according to any one of claims 1 to 3, wherein
said acrylic resin having the total of the acid value and the hydroxyl value is 70 or more has a structural unit deriving at least from methacrylic ester or acrylic ester and also having a polarity controlling group in the molecular structure thereof.

5. The ink for marking according to claim 4, wherein said polarity controlling group is at least one type selected from a group consisting of a carboxyl group and its salt as well as a hydroxyl group.
